# EUROPEAN PATENT SPECIFICATION

(11) **EP 2 792 421 B1**
(45) Date of publication and mention of the grant of the patent: **23.03.2016**
(21) Application number: 13382139.7
(22) Date of filing: 16.04.2013
(51) Int. Cl.: B05C 11/10, B65B 3/32, G01F 11/06

(54) **Dispensing device for a viscous product with automatic volume adjustment**
Spendevorrichtung für ein zähflüssiges Produkt mit automatischer Volumenanpassung
Dispositif de distribution de produit visqueux à réglage de volume automatique

(43) Date of publication of application: 22.10.2014
(73) Proprietor: Grupo Precisgal, S.L., 36312 Vigo (ES)
(72) Inventor: Garrido Pino, Javier Blas, 36312 VIGO (ES)
(74) Representative: Ungria López, Javier

(56) References cited:
- US-A1- 2012 298 696

## Description

### OBJECT OF THE INVENTION

The invention relates to a dispensing device for a viscous product which purpose is to allow the automatic adjustment of the volume of the viscous product to be dispensed in such a way that manual mechanical intervention is not necessary to change the amount of viscous product to be dispensed, which simplifies the execution of this functionality and provides greater reliability.

The invention is applicable to any sector of the industry in which the dispensing of a viscous product is required. More specifically, the invention is applicable to car components assembly plants.

### BACKGROUND OF THE INVENTION

The use of dispensers and dosing devices for liquid products with medium viscosities, such as grease, is well known in car components assembly plants. Until a few years ago, when a product entered production, the production line was normally exclusive for said product and remained stable at least for more than five years.

This circumstance has changed in the last few years, since production lines normally require changing the tools sharing the base equipment quickly, thus achieving a high degree of flexibility and product changes in relatively short periods of time.

Current dosing devices are based either on the possibility of adjusting the dispensed amount by means of adjusting screws or are fixed for an amount but the cartridge may be changed according to the volume required to be dispensed or applied. This means time, different tools and adjustments for each change of model.

There are no dosing devices in the market that allow changing the volume to be dispensed automatically, thus avoiding to the extent possible any complication in the installation and slowness in changing the amount to be dosed in the application of the dosing itself.

There are currently three types of dosing devices, namely: cylinder-type volumetric dosing devices, dosing devices with meters for the amount of viscous product and dosing devices that use an engine and a pneumatic cylinder to carry out the dosing.

The invention is framed within the cylinder-type volumetric dosing devices, based on the capacity to accumulate an amount of the product in a chamber and then applying that amount in the shortest time possible after ensuring the chamber is filled. The chamber is filled by the pressure of the viscous product itself, which is supplied by an auxiliary pump to carry out the application of the product. The adjustment of the amount of volume to be dosed is carried out by means of a quick-change screw (stopper), so the amount is adjusted only by adjusting the position of the screw or by simply changing the screw.

The dosing devices with meters to count the amount of viscous product incorporate a metering system through which the viscous product passes; the dosing is cut when the preselected value is reached. They allow a fairly quick dosing but the last cubic centimeters must be applied at a low speed to achieve an acceptable precision.

The dosing devices that use an engine and a pneumatic cylinder to carry out the dosing have the advantage of being flexible, but produce a slow dosing at a low pressure and are normally used for small amounts.

US 2012/0298696 discloses a metering device according to the preamble of claim 1.

### DESCRIPTION OF THE INVENTION

In order to achieve the objectives and solve the above mentioned inconveniences, the invention provides a new dispensing device for a viscous product that, unlike the state of the art, incorporates the automatic adjustment of the volume, for which, like in the devices comprised in the state of the art, it comprises the following:
- a cylinder with a piston and a piston rod, provided with a filling chamber with the product and a draining chamber of the filling chamber for applying the product. The viscous product is injected into the filling chamber, which produces the displacement of the piston in the direction of the filling of said filling chamber. Subsequently, the viscous product is injected into the draining chamber, which produces the displacement of the piston in the opposite direction, carrying out the draining of the filling chamber and therefore the application of the product.
- a dosing pump to apply the product to a distributing base with an hydraulic distributor of the viscous product governed by an electrovalve to distribute the product to the filling chamber or to the draining chamber according to the previous description. The viscous product coming from the dosing pump, together with the viscous product coming out from the draining chamber, is applied during the filling of said filling chamber.
- Volume adjusting means of the filling chamber to adjust the amount of product to be dispensed.

The main novelty of the invention is centered in that it also comprises:
- An electronic controller with a display, configured to govern the amount of product to be applied and to govern its application.
- The volume adjusting means of the filling chamber comprise: an engine for the longitudinal displacement of a spindle, which position establishes the volume of the filling chamber and for which it constitutes a displacement stopper of the piston rod in the direction of the filling of the filling chamber, and for which the piston rod protrudes through the rear part of the draining chamber of the cylinder; and an analog measuring instrument to measure the position of the spindle in order to position it in correspondence with the filling volume selected by means of the electronic controller, which receives a signal when said spindle is located in the position corresponding to the volume selected.
- An inductive sensor, related to the spindle, for detecting when the piston rod enters into contact with the spindle and for detecting when the filling of the filling chamber takes place with the previously selected volume, thus generating a filling signal detected by the electronic controller.
- A mechanical sensor for detecting the end of the application when the filling chamber is drained and for detecting the start of the filling of said filling chamber, which generates signals indicating the end of the application and the start of the filling of the filling chamber that are detected by the electronic controller.

This configuration presents the important advantage that the adjustment of the volume of the filling chamber is carried out in an automatic manner by adjusting the position of the spindle by means of the actuation of the engine, governed by the electronic controller, until the spindle is positioned in the position establishing the volume selected in the filling chamber, which is confirmed by the measurement carried out by means of the analog measuring instrument, which signals the position of the spindle to the electronic controller, and therefore, if this position corresponds to the filling volume selected. If the analog measuring instrument sends a position value that is too high or a position value below a minimum previously established by program, for example, the electronic controller generates an error signal.

Furthermore, the described configuration presents the important advantage that, by means of the inductive sensor, the controller receives a signal when the filling of the filling chamber takes place, which enables it to detect errors in this functionality. If the filling is carried out in a period of time exceeding a period of time previously established by program, for example, the electronic controller generates an error signal.

The mechanical sensor allows detecting the end of the application, being able of likewise detecting errors if the application is not carried out correctly, for example, in the cases when the dosing exceeds a maximum period of time previously established by program, for example.

Likewise, if the displacement of the mechanical stopper is carried out in a period of time exceeding a period of time specified by program for example, the controller generates an error signal.

The same takes place if the period of time used in the search for the position of origin exceeds a value previously established by program, for example, the controller generates an error signal.

An embodiment of the invention envisages that the device comprises an outlet valve that may be constituted by a closing valve or a closing and suctioning valve, which is arranged in proximity to the point of application of the product; with this configuration, the dripping of the product after the application is avoided and thus the application is carried out precisely, cleanly, reliably and quickly.

An embodiment of the invention envisages the incorporation of a double-channel flow meter arranged between the outlet valve and the outlet of the draining chamber, said configuration allowing the detection of the real amount of product dispensed, which allows storing these values in a database. The incorporation of the analog measuring instrument allows applying the products with greater precision.

The invention contemplates the possibility of incorporating a filter and a pressure regulator at the outlet of the dosing pump to guarantee a constant pressure during the application of the product.

The electronic controller is connected to an external element, such as a programmable logic controller (PLC) for example, or a manual switch, so that, either through said manual switch or the (PLC), a signal indicating the start of the application or an signal indicating the change in the amount of the viscous product to be dosed is generated, which are detected in the electronic controller to govern the application of the product and the amount of said product to be applied.

The mechanical sensor comprised by the device is provided by a first rod, which front end protrudes through the front part of the filling chamber, said first rod being assisted by a high-load spring. At the end of the application of the viscous product of the filling chamber, its piston presses and displaces said first rod, overcoming the force of the spring, and activates a microswitch indicating that the application has ended. In addition, by means of this configuration, when the filling of the filling chamber begins, the first rod is displaced in the opposite direction by the force of the spring so the first rod stops pressing the microswitch, indicating the start of the filling.

Furthermore, the inductive sensor comprises a second rod assisted by a high-load spring and a coil, so that after the filling of the viscous product of the filling chamber ends, the piston rod of the piston presses and displaces the second rod, overcoming the force of the spring, and is introduced into the coil, which generates a signal indicating that the filling has ended.

On the other hand, when the application starts, the second rod comes out of the coil by means of the force of the spring, which indicates the start of the application.

The spindle of the volume adjusting means of the filling chamber comprises a tubular configuration through which interior the second rod of the inductive sensor passes. The rod has a greater length than the spindle, so the second rod protrudes through the spindle by its front end and faces the rear end of the piston rod of the piston. In addition, the spindle is joined together to a guiding carriage of the longitudinal displacement of said spindle and to a blocking carriage of the angular displacement of said spindle, which prevents the spindle from rotating when displaced longitudinally. In addition, the engine is geared to a nut in which interior the spindle is arranged, so when the engine is rotated, the angular displacement of the nut, causing the longitudinal displacement of the spindle guided by the carriage, as described above, takes place, positioning it in the position selected by means of the electronic controller and measured by the analog measuring instrument, obtaining the functionality of automatically adjusting the volume of the product to be applied.

Regarding the analog measuring instrument measuring the position of the spindle, it should be noted that it is a conventional measuring instrument of the magnetic-inductive type that measures the magnetic field generated by a magnet arranged in the guiding carriage of the spindle by means of a coil, so it obtains the linear displacement of said spindle and provides its position.

In order to facilitate the rotation of the nut producing the longitudinal displacement of the spindle, its mounting on axial and radial bearings is envisaged.

According to the foregoing, the electronic controller is configured to generate a signal indicating the correct application when the signal indicating the end of the application is detected, and in addition, it is configured to generate a signal of error in the case of an incorrect application.

The electronic controller is configured to generate the signal indicating that the application was carried out correctly when the activation of the microswitch is maintained during a previously established period of time, in such a way that this signal also indicates that the device is ready to carry out a new application.

The error signal is generated when: a previously established period of time for the filling and application of the product is exceeded, when the magnetic meter measuring the position sends a value for the position of the spindle below a previously established minimum, when the displacement of the second rod of the mechanical sensor is carried out within a period of time exceeding a previously established period of time, and when the time used in the search for the position of origin of the spindle exceeds a previously established period of time.

The electronic controller is also configured to generate a signal indicating the start of the filling of the filling chamber when the microswitch is deactivated after the generation of the signal indicating the correct application and a previously established period of time elapses, during which said microswitch is kept deactivated.

Lastly, it should be noted that, in addition, the electronic controller is configured to generate a signal indicating the filling of the filling chamber when the inductive sensor is kept active during a period of time previously established by program. The above described configuration allows carrying out the dispensing precisely, cleanly, reliably and quickly, while allowing the modification of the amount to be dispensed quickly and reliably without the need to make manual adjustments.

Furthermore, the configuration described above simplifies the task of connecting the device to the dispensing installation and reduces costs for not having to introduce new elements when a new amount to be applied is needed.

The above described configuration also allows working the device in an independent manner due to the configuration of the electronic controller connected to the different elements described.

The invention also allows maintaining a continuous speed/pressure of application from the first to the last gram of product dispensed, adjusting the amount to be applied by means of the use of the display and push buttons connected to the electronic controller.

Next, in order to facilitate a better comprehension of this specification, and being an integral part thereof, a series of figures representing the object of the invention in an illustrative rather than limitative manner is attached.

### BRIEF STATEMENT OF THE FIGURES

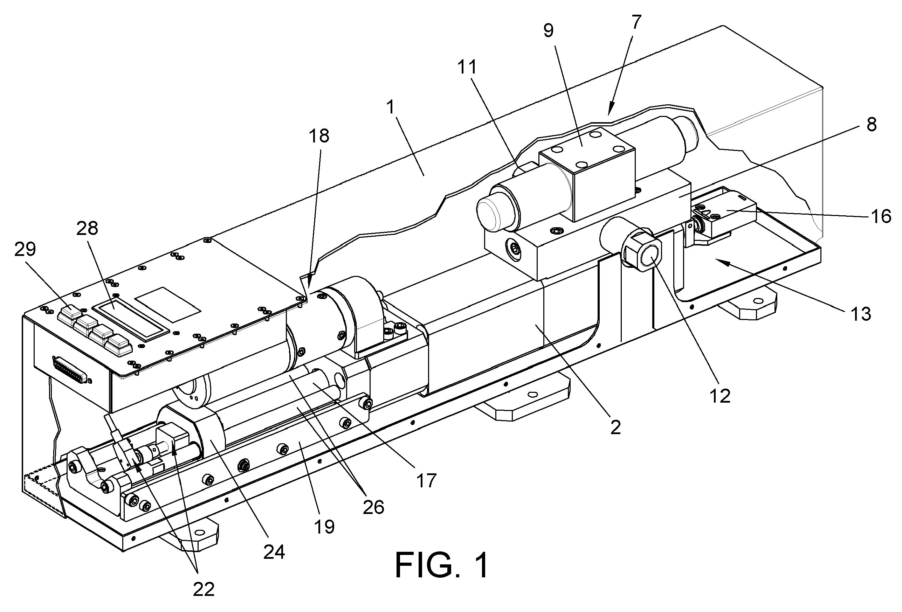

**Figure 1****.-** Shows a perspective view of the preferred embodiment of the invention, with a hole made in its casing to allow visualizing the different elements constituting said device.
**Figure 2****.-** Shows a sectioned view of the device of the previous figure in the position in which the filling chamber of the cylinder is ready to start the filling with the viscous product to be applied, which is indicated by the mechanical sensor to the electronic controller.

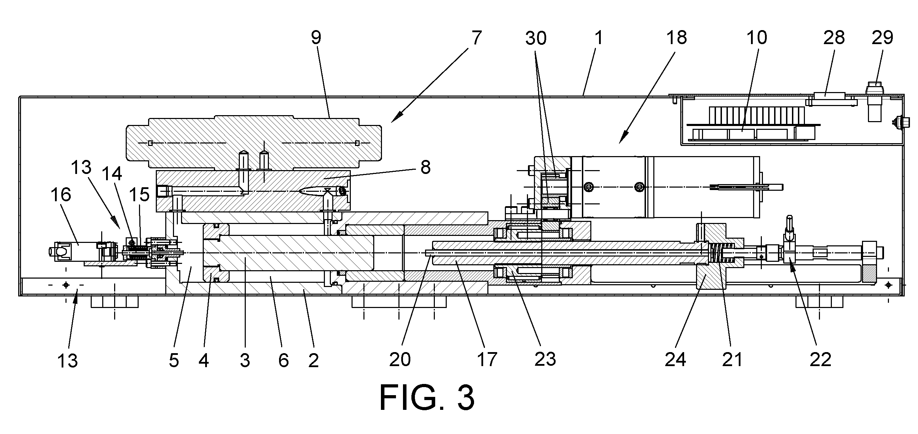

**Figure 3****.-** Shows a sectioned view equivalent to the previous figure, in which the filling of the filling chamber has started.

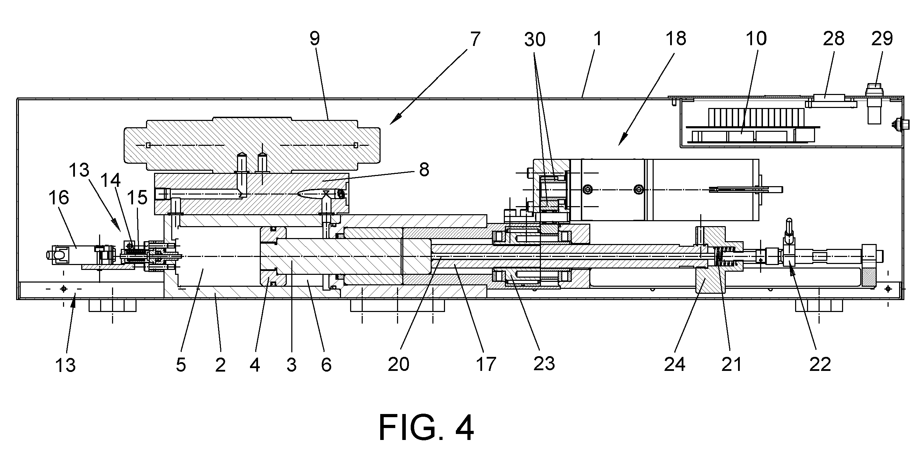

**Figure 4****.-** Shows a view equivalent to the previous figure in which the filling of the filling chamber has taken place; said position is detected by the inductive sensor, which signals it to the electronic controller.

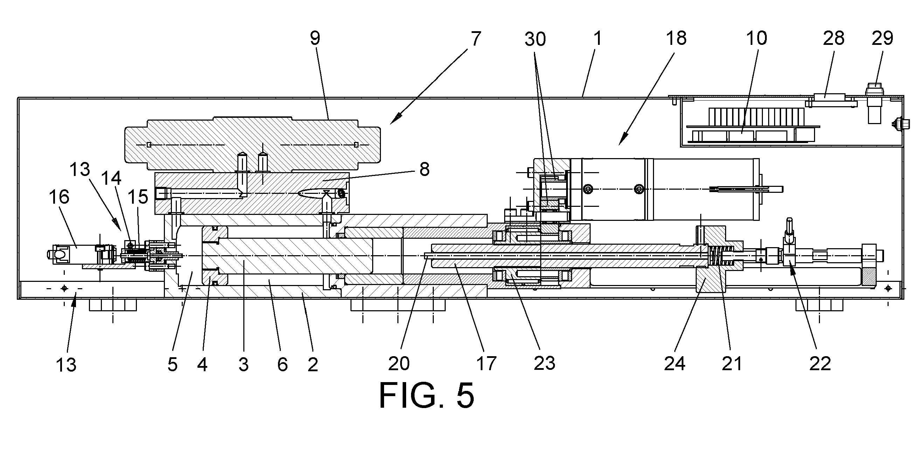

**Figure 5****.-** Shows a view equivalent to figures 2 to 4, but in a position in which the application of the product included in the filling chamber is being carried out.

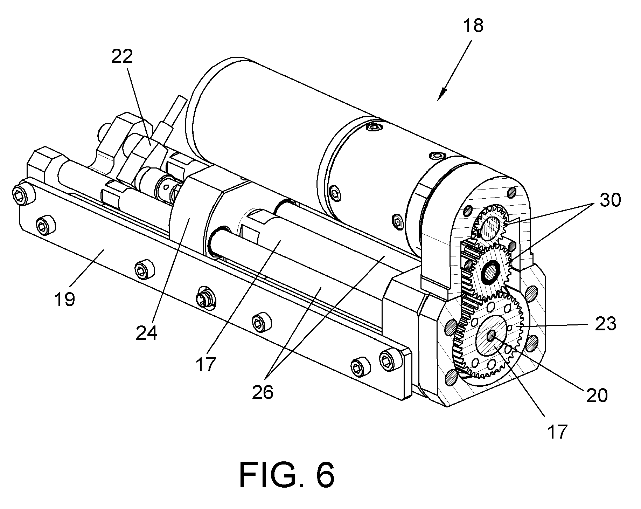

**Figures 6** **and** **7****.-** Show different perspective views of the volume adjusting means of the filling chamber by means of which the amount of product to be dispensed is adjusted automatically; all of the foregoing governed by the electronic controller.

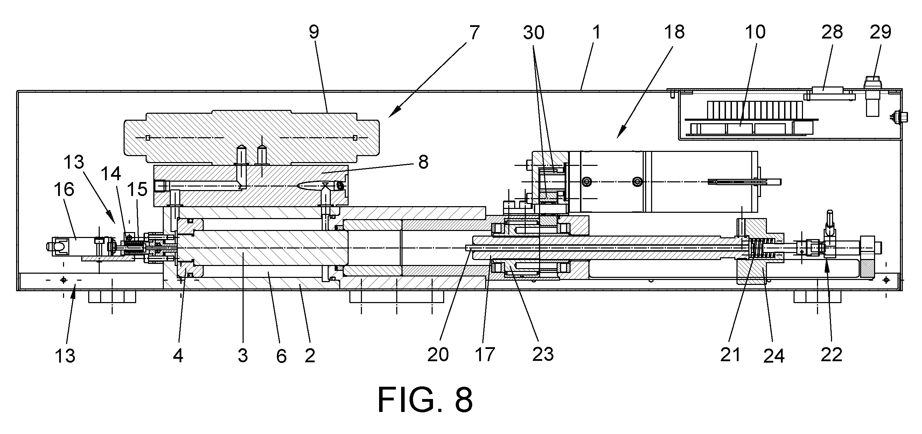

**Figure 8****.-** Shows a view equivalent to figures 2 to 5, in which the position of the stopper establishing the volume of the filling chamber has been modified to carry out the application of a new volume with greater capacity than the one represented in figures 2 to 5.

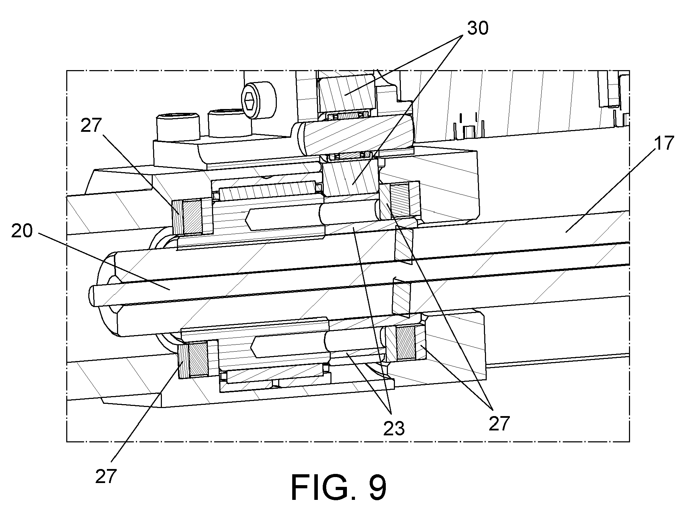

**Figure 9****.-** Shows a detail of the volume adjusting means of the filling chamber that adjust the product to be dispensed, showing the gear of the engine producing the displacement of the stopper determining the volume of the filling chamber.

### DESCRIPTION OF THE PREFERRED EMBODIMENT

Next, a description of the invention will be made based on the aforementioned figures.

The device of the invention comprises a casing **1,** which houses a cylinder **2** in its interior, which in turn houses a piston **4** and a piston rod **3** in its interior, so the volume of the cylinder **2** left in front of the piston **4** defines a filling chamber **5,** and the volume left behind the piston **4** of the cylinder **2** defines a draining chamber **6.**

Both the front end of the filling chamber **5** and the rear end of the draining chamber **6** are connected to a distributing base **7** that comprises an hydraulic distributor **8** of viscous product governed by an electrovalve **9,** which in turn is governed by an electronic controller **10,** which is also configured to govern the operation of the entire device.

The hydraulic distributor **8** comprises an inlet duct **11** and an outlet duct **12,** so the inlet duct **11** is connected to a dosing pump (not represented), by means of which the viscous product is applied to the hydraulic distributor 8 of the distributor base **7,** which, as commented above, is connected to the front part of the filling chamber **5** and to the rear part of the draining chamber **6,** so the product is applied to the filling chamber **5** or to the draining chamber **6** in such a way that the application of the product of the draining chamber **6** produces the displacement of the piston **4** in the forward direction; consequently, if there is product in the filling chamber **5,** it exits through the outlet duct **12,** carrying out its application.

A mechanical sensor **13** is included in the front end of the filling chamber **5,** which comprises a microswitch **16** that may be activated by means of a first rod **14** assisted by a high-load spring **15,** so the front end of the first rod **14,** by means of the force of the spring, is kept close to the actuation of the microswitch **16,** since its rear end is slightly introduced into the front part of the filling chamber **5.** When the piston **4** enters into contact with the front wall of the filling chamber **5,** it presses the first rod **14,** displacing it by overcoming the force of the spring **15** that determines the activation of the microswitch **16,** which indicates to the electronic controller **10** that the application of the product included in the filling chamber has ended. This signal is detected by the electronic controller **10,** which waits for a few milliseconds to generate the signal indicating that the application has been carried out correctly, while indicating that the device is ready to carry out a new application.

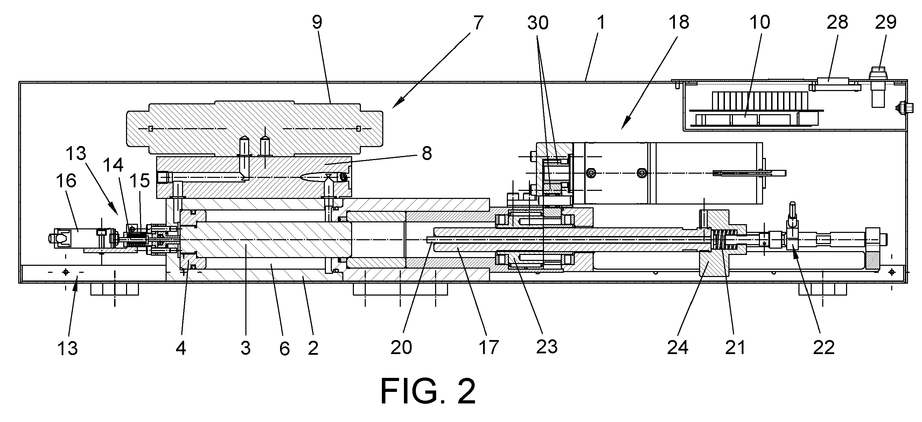

In this situation, represented in figure 2, the operation of the electrovalve **9** is governed to apply the viscous product pumped by the dosing pump through the hydraulic distributor **8** to the front part of the filling chamber **5,** which produces the displacement of the piston **4** by the entry of the viscous product into the filling chamber. As the filling chamber **5** is filled, producing the displacement of the piston **4** and the piston rod **6,** the draining of the product contained in the draining chamber **6** through the hydraulic distributor **8** takes place at the same time, which uses said viscous product to fill the filling chamber **5** together with the viscous product coming from the dosing pump.

In this position, the draining chamber **6** is filled, containing the viscous product that has been previously injected into the draining chamber **6** to carry out the application, as will be explained below.

When the viscous product enters through the front part of the filling chamber **5,** the displacement of the piston **4** and the piston rod **3** is produced as the filling of the filling chamber **5** takes place, so the force of the spring **15** produces the displacement of the first rod **14,** which stops pressing the microswitch **16.** The foregoing establishes the start of the filling of the filling chamber **5.** In this displacement, the piston **4** pushes the product included in the draining chamber **6,** introducing it into the hydraulic distributor **8,** where it is mixed with the viscous product pushed by the dosing pump.

The displacement of the piston **4** and the piston rod **3** is carried out until said piston rod **3** enters into contact with a spindle **17** that is part of the volume adjusting means of the filling chamber, which also comprise an engine **18** that adjusts the position of the spindle **17,** position detected by means of an analog measuring instrument **19** that indicates the position of the spindle **17** to the electronic controller **10.**

The spindle **17** presents a tubular configuration through which interior a second rod **20** passes, assisted by a high-load spring **21,** so the second rod **20** has a greater length than the spindle **17,** protruding by its front end through the force of the spring **21.** The front end of the spindle **17** and of the second rod **20** face the rear end of the piston rod **3,** so when the piston rod **3** enters into contact with the second rod **20** during its displacement, the piston rod **3** presses the same and carries out its displacement, overcoming the force of the spring **21,** so the rear end of the second rod is introduced into a coil of an inductive sensor **22** that generates a signal indicating that the filling chamber **5** has been filled with the product to be applied, signal detected by the electronic controller **10.**

After the filling chamber **5** has been filled with the viscous product, its application begins, for which the product coming from the dosing pump is injected into the draining chamber **6,** actuating the electrovalve **9** that governs the hydraulic distributor **8,** so it is applied to the rear part of the draining chamber **6,** which produces the displacement in the forward direction of the piston **4,** producing the exit of the viscous product through the outlet duct **12** provided in the hydraulic distributor **8.**

The invention envisages that the position of the spindle **17** may be adjusted automatically to modify the volume of the filling chamber by means of the engine **18,** for which said engine **18** is geared to a nut **23** by means of pinions **30** in such a way that the spindle is arranged in the interior of said nut **23,** configuration that allows the production of the angular displacement of the nut **23** by rotating the engine, which causes the longitudinal displacement of the spindle, positioning it in the previously selected position by means of the electronic controller **10** and measuring it with the analog measuring instrument **19.**

In order to carry out the guiding of the longitudinal displacement of the spindle **17,** the union of its rear end to a carriage **24,** in which the inductive sensor **22** is included, is envisaged, so the carriage **24** also prevents the angular displacement of the spindle **17** when activated by the engine **18.**

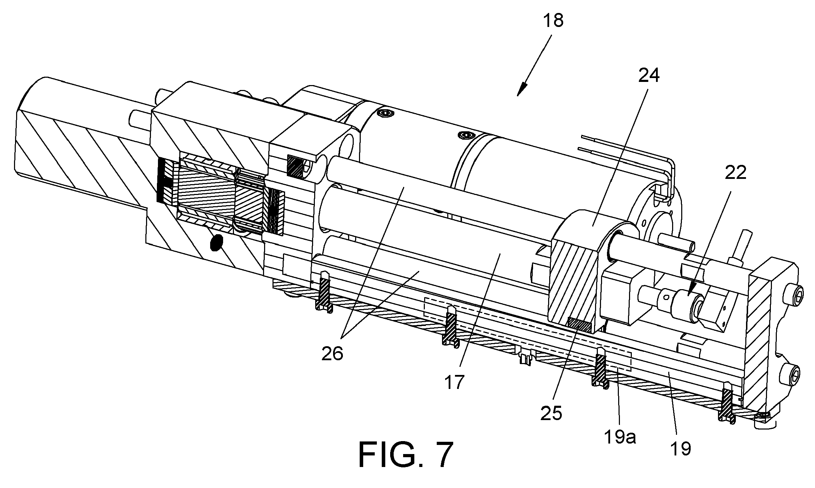

The analog measuring instrument **19** is a conventional measuring instrument of the magnetic-inductive type that measures the magnetic field generated by a magnet **25** arranged in the carriage **24** to obtain the linear displacement of said spindle **17** by means of a coil 19a (figure 7), so the value of the position of the spindle **17** obtained by the analog measuring device **19** is received in the electronic controller **10,** which governs the operation of the engine **18** to establish the position of the spindle **17** corresponding to the volume of the product to be applied.

The carriage **24** is arranged on guides **26,** which guide its displacement and consequently, the displacement of the spindle **17.**

The electronic controller **10** comprises a display **28** to show the different states of operation of the device. The electronic controller is configured to generate an error signal indicating an incorrect application, shown in the display **28,** when it detects that the application exceeds a previously established period of time for the filling of the filling chamber **6,** as well as when the application of the product exceeds a previously programed period of time. Likewise, it generates an error signal indicating an incorrect application when the magnetic meter **19** measuring the position sends a value for the position of the spindle **17** below a previously established minimum, when the displacement of the first rod **14** of the mechanical sensor is carried out within a period of time that is greater than the previously established period of time, and when the time used in the search for the position of origin of the spindle **17** exceeds a period of time previously prefixed in the electronic controller **10.**

In addition, the electronic controller **10** is configured to generate a signal indicating a correct application when the activation of the microswitch **16** is maintained during a previously established period of time. This signal also indicates that the device is ready to carry out a new application.

Furthermore, the electronic controller generates a signal indicating the start of the filling of the filling chamber **6** when the microswitch **16** is activated after the generation of the signal indicating the correct application, and in addition, when a previously established period of time elapses during which said microswitch **16** is kept deactivated.

The electronic controller **10** is also configured to generate a signal indicating the filling of the filling chamber **6** when the activation of the inductive sensor **22** is maintained during a previously established period of time.

The electronic controller **10** is connected to an external element, such as a programmable logic controller (PLC) or a manual switch (not represented), so the signal indicating the start of the application or the change in the amount of the viscous product to be dosed is generated by means thereof, the process being then controlled by means of the electronic controller **10,** as above described.

In addition, the electronic controller **10** is connected to a keyboard **29** to access the different programming stored in the electronic controller **10,** such as confirming the value of the amount of product to be applied, cancelling the programming of the amount of product, or increasing or decreasing the value of the amount of product to be dosed.

Furthermore, the display **28** allows programming the amount of product to be dosed for a certain selected program or allocating the product to each one of the different programs available in the case of remote control by means of a (PLC) or a similar device, as well as the visualization of failures and errors.

Lastly, it should be noted that the device may comprise an outlet valve, such as a closing valve or a closing and suctioning valve (not represented), which is arranged near the point of application of the product and prevents the dripping of the product after the application.

Furthermore, the device of the invention envisages the incorporation of a double-channel flow controller (not represented), arranged between the outlet valve and an outlet duct **12** of the distributing base **7** for detecting the real amount of product dispensed, values that are stored in a database.

In addition, the invention envisages the incorporation of a filter and a pressure regulator (not represented) at the outlet of the dosing pump to guarantee constant pressure.

## Claims

1. Dispensing device for a viscous product with automatic volume adjustment comprising:
- a cylinder (2) with a piston (4) and a piston rod (3), provided with a filling chamber (5) with the product and a draining chamber (6) of the filling chamber (5) to apply the product; wherein the piston is displaced in the direction of the filling of the filling chamber (5) due to the injection of the viscous product into said filling chamber (5), and is displaced in the opposite direction of the draining due the injection of the viscous product into the draining chamber (6),
- a dosing pump to apply the product to,
- a distributing base (7), provided with an hydraulic distributor (8) of viscous product governed by an electrovalve (9), to distribute the product to a chamber selected between the filling chamber (5) and the draining chamber (6); wherein the viscous product coming from the dosing pump, together with the viscous product coming out from the draining chamber (6), is applied during the filling of said filling chamber (5),
- volume adjusting means of the filling chamber (5) to adjust the amount of product to be dispensed;
**characterized in that** it comprises:
- an electronic controller (10) with a display (28), configured to govern the amount of product to be applied and its application,
- the volume adjusting means of the filling chamber (5) comprise:
° an engine (18) for the longitudinal displacement of
∘ a spindle (17), which position establishes the volume of the filling chamber (5), for which it constitutes a displacement stopper of the piston rod in the direction of the filling of the filling chamber (5), and for which the piston rod (3) protrudes through the rear part of the draining chamber (6) of the cylinder (2),
∘ an analog measuring instrument (19) to measure the position of the spindle (17) in order to position it in correspondence with the filling volume selected by means of the electronic controller (10), which receives a signal when said spindle (17) is located in the position corresponding to the volume selected,
- an inductive sensor, related to the spindle (17), for detecting when the piston rod enters into contact with the spindle (17) and when the filling of the filling chamber (5) takes place with the previously selected volume, which generates a signal indicating the filling that is detected by the electronic controller (10),
- a mechanical sensor (13) for detecting the end of the application when the filling chamber (5) is drained and for detecting the start of the filling of said filling chamber (5), which generates signals indicating the end of the application and the start of the filling of the filling chamber (5), which are detected by the electronic controller (10).

2. Dispensing device for a viscous product with automatic volume adjustment according to claim 1, **characterized in that** the mechanical sensor (13) comprises a first rod (14), which front end protrudes through the front part of the filling chamber (5), said first rod (14) being assisted by a high-load spring (15) at the end of the application of the viscous product of the filling chamber (5), the piston (4) presses and displaces said first rod (14), overcoming the force of the spring (15), and activates a microswitch (16) indicating that the application has ended, and when the filling of the filling chamber (5) begins, the first rod (14) is displaced in the opposite direction by the force of the spring so it stops pressing the microswitch (16), indicating the start of the filling.

3. Dispensing device for a viscous product with automatic volume adjustment according to claim 1, **characterized in that** the inductive sensor comprises a second rod (20) assisted by a high-load spring (21) and a coil, so that after the filling of the viscous product of the filling chamber (5) ends, the piston rod presses and displaces the second rod (20), overcoming the force of the spring, and is introduced into the coil, which generates a signal indicating that the filling has ended, and when the application starts, the second rod (20) comes out of the coil by means of the force of the spring, which indicates the start of the application.

4. Dispensing device for a viscous product with automatic volume adjustment according to claim 3, **characterized in that** the spindle (17) of the volume adjusting means of the filling chamber comprises a tubular configuration, whose front end faces the rear end of the piston rod (3), and through which interior the second rod (20) of the inductive sensor, which has a greater length than the spindle (17), passes, protruding through the front end of said spindle (17); wherein the spindle (17) is joined together to a guiding carriage (24) for the guiding of the longitudinal displacement of said spindle and to a blocking carriage of the angular displacement of said spindle; and where the engine (18) is geared to a nut (23) in which interior the spindle (17) is arranged, so when the engine is rotated, the angular displacement of the nut (23) takes place, causing the longitudinal displacement of the spindle (17) and positioning it in the position selected by means of the electronic controller (10) and measured by the analog measuring instrument (19).

5. Dispensing device for a viscous product with automatic volume adjustment according to claim 4, **characterized in that** the analog measuring instrument (19) is a conventional measuring instrument of the magnetic-inductive type that measures the magnetic field generated by a magnet (25) arranged in the guiding carriage (24) of the spindle (17) by means of a coil (19a), in order to obtain the linear displacement of said spindle (17).

6. Dispensing device for a viscous product with automatic volume adjustment according to claim 4, **characterized in that** the nut (23) is mounted on axial and radial (27) bearings to facilitate its rotation.

7. Dispensing device for a viscous product with automatic volume adjustment according to claim 1, **characterized in that** the electronic controller (10) is configured to generate a signal selected between a signal indicating the correct application when the signal indicating the end of the application is detected, and an error signal indicating an incorrect application.

8. Dispensing device for a viscous product with automatic volume adjustment according to claims 2 and 7, **characterized in that** the electronic controller (10) is configured to generate the signal indicating that the application has been carried out correctly when the activation of the microswitch (16) is maintained during a previously established period of time, signal that also indicates that the device is ready to carry out a new application; the electronic controller (10) also being configured to generate a signal indicating the start of the filling of the filling chamber (5) when the microswitch is deactivated after the generation of the signal indicating the correct application and a previously established period of time elapses during which said microswitch is kept deactivated; and the electronic controller (10) also being configured to generate a signal indicating the filling of the filling chamber (5) when the activation of the inductive sensor is kept during a previously established period of time.

9. Dispensing device for a viscous product with automatic volume adjustment according to claims 2 and 7, **characterized in that** the electronic controller (10) is configured to generate the error signal indicating an incorrect application when it detects that a previously established period of time for the filling and application of the product is exceeded, when the magnetic meter measuring the position sends a value for the position of the spindle below a previously established minimum, when the displacement of the first rod (14) of the mechanical sensor is carried out within a period of time exceeding a previously established period of time, and when the time used in the search for the position of origin of the spindle (17) exceeds a previously established period of time.

10. Dispensing device for a viscous product with automatic volume adjustment according to claim 1, **characterized in that** the electronic controller (10) is connected to an external element selected between a programmable logic controller (PLC) and a manual switch, to generate a signal indicating the start of the application or a signal indicating the change in the amount of the viscous product to be dosed, detected in the electronic controller (10).

11. Dispensing device for a viscous product with automatic volume adjustment according to claim 1, **characterized in that** it comprises an outlet valve selected between a closing valve or a closing and suctioning valve, arranged in proximity to the point of application of the product to avoid the dripping of the product after the application.

12. Dispensing device for a viscous product with automatic volume adjustment according to claim 1, **characterized in that** it comprises a double-channel flow meter arranged between the outlet valve and an outlet duct (12) of the distributing base (7) for detecting the real amount of product dispensed, values that are stored in a database.

13. Dispensing device for a viscous product with automatic volume adjustment according to claim 1, **characterized in that** it comprises a filter and a pressure regulator at the outlet of the dosing pump to guarantee constant pressure.

## Patentansprüche

1. Ausgabevorrichtung für ein viskoses Erzeugnis mit automatischer Volumenregulierung, die umfasst:
einen Zylinder (2) mit einem Kolben (4) und einer Kolbenstange (3), der mit einer Füllkammer (5) mit dem Erzeugnis und einer Ablasskammer (6) der Füllkammer (5) zum Zuführen des Erzeugnisses versehen ist, wobei der Kolben aufgrund der Einspritzung des viskosen Erzeugnisses in die Füllkammer (5) in der Richtung zum Füllen der Füllkammer (5) verschoben wird und aufgrund der Einspritzung des viskosen Erzeugnisses in die Ablasskammer (6) in der entgegengesetzten Richtung zum Ablassen verschoben wird,
eine Dosierpumpe, die das Erzeugnis einer Verteilungsbasis (7) zuführt, die mit einem hydraulischen Verteiler (8) für viskoses Erzeugnis versehen ist, der von einem Magnetventil (9) gesteuert wird, um das Erzeugnis an eine aus der Füllkammer (5) und der Ablasskammer (6) ausgewählte Kammer zu verteilen, wobei beim Füllen der Füllkammer (5) das viskose Erzeugnis, das von der Dosierpumpe kommt, zusammen mit dem viskosen Erzeugnis zugeführt wird, das aus der Ablasskammer (6) austritt,
eine Volumenregulierungseinrichtung der Füllkammer (5), die die Menge an auszugebendem Erzeugnis reguliert;
**dadurch gekennzeichnet, dass** sie umfasst:
eine elektronische Steuereinrichtung (10) mit einer Anzeigeeinrichtung (28), die so eingerichtet ist, dass sie die zuzuführende Menge an Erzeugnis und ihre Zufuhr steuert, wobei die Volumenregulierungseinrichtung der Füllkammer (5) umfasst:
einen Motor (18) für die Längsverschiebung,
eine Spindel (17), deren Position das Volumen der Füllkammer (5) bestimmt und für die sie einen Verschiebungsanschlag der Kolbenstange in der Richtung zum Füllen der Füllkammer (5) bildet und für die die Kolbenstange (3) über den hinteren Teil der Ablasskammer (6) des Zylinders (2) vorsteht,
ein analoges Messinstrument (19), das die Position der Spindel (17) misst, um sie entsprechend dem Füllvolumen zu positionieren, das mittels der elektronischen Steuereinrichtung (10) ausgewählt wird, die ein Signal empfängt, wenn sich die Spindel (17) an der Position befindet, die dem ausgewählten Volumen entspricht,
einen induktiven Sensor, der mit der Spindel (17) verbunden ist, mit dem erfasst wird, wenn die Kolbenstange in Kontakt mit der Spindel (17) kommt und wenn das Füllen der Füllkammer (5) mit dem zuvor ausgewählten Volumen stattfindet, und der ein Signal erzeugt, das das Füllen anzeigt und das durch die elektronische Steuereinrichtung (10) erfasst wird,
einen mechanischen Sensor (13), mit dem das Ende der Zufuhr erfasst wird, wenn die Füllkammer (5) abgelassen wird, und mit dem der Beginn des Füllens der Füllkammer (5) erfasst wird, und der Signale erzeugt, die das Ende der Zufuhr und den Beginn des Füllens der Füllkammer (5) anzeigen und die durch die elektronische Steuereinrichtung (10) erfasst werden.

2. Ausgabevorrichtung für ein viskoses Erzeugnis mit automatischer Volumenregulierung nach Anspruch 1, **dadurch gekennzeichnet, dass** der mechanische Sensor (13) eine erste Stange (14) umfasst, deren vorderes Ende über den vorderen Teil der Füllkammer (5) vorsteht, wobei die erste Stange (14) am Ende der Zufuhr des viskosen Erzeugnisses der Füllkammer (5) durch eine Feder (15) starker Spannung unterstützt wird, der Kolben (4) die erste Stange (14) drückt und sie verschiebt, die Kraft der Feder (15) überwindet und einen Mikroschalter (16) aktiviert und damit anzeigt, dass die Zufuhr beendet ist, und, wenn das Füllen der Füllkammer (5) beginnt, die erste Stange (14) durch die Kraft der Feder in der entgegengesetzten Richtung verschoben wird, so dass sie Drücken des Mikroschalters (16) beendet und damit den Beginn des Füllens anzeigt.

3. Ausgabevorrichtung für ein viskoses Erzeugnis mit automatischer Volumenregulierung nach Anspruch 1, **dadurch gekennzeichnet, dass** der induktive Sensor eine zweite Stange (20), die von einer Feder (21) starker Spannung unterstützt wird, und eine Spule umfasst, so dass, wenn das Füllen der Füllkammer (5) mit dem viskosen Erzeugnis endet, die Kolbenstange die zweite Stange (20) drückt und sie verschiebt, die Kraft der Feder überwindet und in die Spule eingeführt wird, wodurch ein Signal erzeugt wird, das anzeigt, dass das Füllen beendet ist, und wenn die Zufuhr beginnt, die zweite Stange (20) durch die Kraft der Feder aus der Spule austritt und dies den Beginn der Zufuhr anzeigt.

4. Ausgabevorrichtung für ein viskoses Erzeugnis mit automatischer Volumenregulierung nach Anspruch 3, **dadurch gekennzeichnet, dass** die Spindel (17) der Volumenregulierungseinrichtung der Füllkammer eine Röhrenkonstruktion umfasst, deren vorderes Ende dem hinteren Ende der Kolbenstange (3) zugewandt ist und über deren Innenraum die zweite Stange (20) des induktiven Sensors, deren Länge größer ist als die der Spindel (17), hindurchtritt und die über das vordere Ende der Spindel (17) vorsteht, wobei die Spindel (17) mit einem Führungswagen (24) zum Führen der Verschiebung der Spindel (17) in Längsrichtung sowie mit einem Wagen zum Blockieren der Winkelverschiebung der Spindel verbunden ist und der Motor (18) mit einer Mutter (23) in Eingriff ist, in deren Innerem die Spindel (17) angeordnet ist, so dass, wenn der Motor gedreht wird, die Winkelverschiebung der Mutter (23) stattfindet und dies die Verschiebung der Spindel (17) in Längsrichtung bewirkt und sie an die Position versetzt, die mittels der elektronischen Steuereinrichtung (10) ausgewählt und mit dem analogen Messinstrument (19) gemessen wird.

5. Ausgabevorrichtung für ein viskoses Erzeugnis mit automatischer Volumenregulierung nach Anspruch 4, **dadurch gekennzeichnet, dass** das analoge Messinstrument (19) ein herkömmliches Messinstrument des magnetisch-induktiven Typs ist, das das von einem in dem Führungswagen (24) der Spindel (17) angeordneten Magneten erzeugte Magnetfeld mittels einer Spule (19a) misst, um die lineare Verschiebung der Spindel (17) zu erfassen.

6. Ausgabevorrichtung für ein viskoses Erzeugnis mit automatischer Volumenregulierung nach Anspruch 4, **dadurch gekennzeichnet, dass** die Mutter (23) an Axial- und Radiallagern (27) installiert ist, um ihre Drehung zu ermöglichen.

7. Ausgabevorrichtung für ein viskoses Erzeugnis mit automatischer Volumenregulierung nach Anspruch 1, **dadurch gekennzeichnet, dass** die elektronische Steuereinrichtung (10) so eingerichtet ist, dass sie ein Signal erzeugt, das zwischen einem Signal, das die ordnungsgemäße Zufuhr anzeigt, wenn das Signal erfasst wird, das das Ende der Zufuhr anzeigt, und einem Fehlersignal ausgewählt wird, das eine nicht ordnungsgemäße Zufuhr anzeigt.

8. Ausgabevorrichtung für ein viskoses Erzeugnis mit automatischer Volumenregulierung nach den Ansprüchen 2 und 7, **dadurch gekennzeichnet, dass** die elektronische Steuereinrichtung (10) so eingerichtet ist, dass sie das Signal erzeugt, das anzeigt, dass die Zufuhr ordnungsgemäß ausgeführt worden ist, wenn die Aktivierung des Mikroschalters (16) während eines im Voraus festgelegten Zeitraums aufrechterhalten wird, wobei das Signal auch anzeigt, dass die Vorrichtung bereit ist, eine neue Zufuhr auszuführen, und die elektronische Steuereinrichtung (10) des Weiteren so eingerichtet ist, dass sie ein Signal erzeugt, das den Beginn des Füllens der Füllkammer (5) anzeigt, wenn der Mikroschalter nach der Erzeugung des Signals deaktiviert wird, das die ordnungsgemäße Zufuhr anzeigt, und ein im Voraus festgelegter Zeitraum verstreicht, während dem der Mikroschalter deaktiviert gehalten wird, und die elektronische Steuereinrichtung (10) des Weiteren so eingerichtet ist, dass sie ein Signal erzeugt, das das Füllen der Füllkammer (5) anzeigt, wenn die Aktivierung des induktiven Sensors während eines im Voraus festgelegten Zeitraums aufrechterhalten wird.

9. Ausgabevorrichtung für ein viskoses Erzeugnis mit automatischer Volumenregulierung nach den Ansprüchen 2 und 7, **dadurch gekennzeichnet, dass** die elektronische Steuereinrichtung (10) so eingerichtet ist, dass sie das Fehlersignal erzeugt, das eine nicht ordnungsgemäße Zufuhr anzeigt, wenn sie erfasst, dass ein im Voraus festgelegter Zeitraum für das Füllen und die Zufuhr des Erzeugnisses überschritten wird, wenn die magnetische Messeinrichtung, die die Position misst, einen Wert für die Position der Spindel (17) unterhalb eines im Voraus festgelegten Minimums sendet, wenn die Verschiebung der ersten Stange (14) des mechanischen Sensors innerhalb eines Zeitraums ausgeführt wird, der einen im Voraus festgelegten Zeitraum überschreitet, und wenn die bei der Suche der Ausgangsposition der Spindel (17) aufgewendete Zeit einen im Voraus festgelegten Zeitraum überschreitet.

10. Ausgabevorrichtung für ein viskoses Erzeugnis mit automatischer Volumenregulierung nach Anspruch 1, **dadurch gekennzeichnet, dass** die elektronische Steuereinrichtung (10) mit einem aus einer programmierbaren Steuerung (programmable logic controller- PLC) und einem manuellen Schalter ausgewählten externen Element zum Erzeugen eines Signals, das den Beginn der Zufuhr anzeigt, oder eines Signals verbunden ist, das die Änderung der zu dosierenden Menge des viskosen Erzeugnisses anzeigt, die in der elektronischen Steuereinrichtung (10) erfasst werden.

11. Ausgabevorrichtung für ein viskoses Erzeugnis mit automatischer Volumenregulierung nach Anspruch 1, **dadurch gekennzeichnet, dass** sie ein Auslassventil umfasst, das aus einem Schließventil oder einem Schließ-und-Saug-Ventil ausgewählt wird, das in der Nähe des Punktes der Zufuhr des Erzeugnisses angeordnet ist, um das Tropfen des Erzeugnisses nach der Zufuhr zu vermeiden.

12. Ausgabevorrichtung für ein viskoses Erzeugnis mit automatischer Volumenregulierung nach Anspruch 1, **dadurch gekennzeichnet, dass** es einen Zwei-Kanal-Durchflussmesser umfasst, der zwischen dem Auslassventil und einer Auslassleitung (12) der Verteilungsbasis (7) angeordnet ist, um die tatsächlich ausgegebene Menge des Erzeugnisses zu erfassen und Werte in einer Datenbank zu speichern.

13. Ausgabevorrichtung für ein viskoses Erzeugnis mit automatischer Volumenregulierung nach Anspruch 1, **dadurch gekennzeichnet, dass** sie einen Filter und einen Druckregler an dem Auslass der Dosierpumpe erfasst, um konstanten Druck zu gewährleisten.

## Revendications

1. Dispositif de distribution pour un produit visqueux avec réglage de volume automatique comprenant :
un cylindre (2) avec un piston (4) et une tige de piston (3), pourvu d'une chambre de remplissage (5) avec le produit et d'une chambre de drainage (6) de la chambre de remplissage (5) pour appliquer le produit ; dans lequel le piston est déplacé dans la direction du remplissage de la chambre de remplissage (5) du fait de l'injection du produit visqueux dans ladite chambre de remplissage (5), et est déplacé dans la direction opposée du drainage du fait de l'injection du produit visqueux dans la chambre de drainage (6),
une pompe de dosage pour appliquer le produit à,
une base de distribution (7), pourvue d'un distributeur hydraulique (8) de produit visqueux gouverné par une électrovanne (9), pour distribuer le produit à une chambre sélectionnée entre la chambre de remplissage (5) et la chambre de drainage (6) ; dans lequel le produit visqueux venant de la pompe de dosage, conjointement avec le produit visqueux sortant de la chambre de drainage (6), est appliqué pendant le remplissage de ladite chambre de remplissage (5),
des moyens de réglage de volume de la chambre de remplissage (5) pour régler la quantité de produit à distribuer ;
**caractérisé en ce qu'**il comprend :
une commande électronique (10) avec un affichage (28), configurée pour gouverner la quantité de produit à appliquer et son application,
les moyens de réglage de volume de la chambre de remplissage (5) comprennent :
un moteur (18) pour le déplacement longitudinal de
une broche (17), dont la position établit le volume de la chambre de remplissage (5), pour laquelle elle constitue un élément d'arrêt de déplacement de la tige de piston dans la direction du remplissage de la chambre de remplissage (5), et pour laquelle la tige de piston (3) fait saillie à travers la partie arrière de la chambre de drainage (6) du cylindre (2),
un instrument de mesure analogique (19) pour mesurer la position de la broche (17) afin de la positionner en correspondance avec le volume de remplissage sélectionné au moyen de la commande électronique (10), qui reçoit un signal quand ladite broche (17) est située dans la position correspondant au volume sélectionné,
un capteur inductif, lié à la broche (17), pour détecter quand la tige de piston entre en contact avec la broche (17) et quand le remplissage de la chambre de remplissage (5) a lieu avec le volume sélectionné au préalable, ce qui génère un signal indiquant le remplissage qui est détecté par la commande électronique (10),
un capteur mécanique (13) pour détecter la fin de l'application quand la chambre de remplissage (5) est drainée et pour détecter le début du remplissage de ladite chambre de remplissage (5), qui génère des signaux indiquant la fin de l'application et le début du remplissage de la chambre de remplissage (5), qui sont détectés par la commande électronique (10).

2. Dispositif de distribution pour un produit visqueux avec réglage de volume automatique selon la revendication 1, **caractérisé en ce que** le capteur mécanique (13) comprend une première tige (14), dont l'extrémité avant fait saillie à travers la partie avant de la chambre de remplissage (5), ladite première tige (14) étant assistée par un ressort (15) à forte charge à la fin de l'application du produit visqueux de la chambre de remplissage (5), le piston (4) presse et déplace ladite première tige (14), surmontant la force du ressort (15), et actionne un micro-interrupteur (16) indiquant que l'application est terminée, et quand le remplissage de la chambre de remplissage (5) commence, la première tige (14) est déplacée dans la direction opposée par la force du ressort de façon à stopper la pression du micro-interrupteur (16), indiquant le début du remplissage.

3. Dispositif de distribution pour un produit visqueux avec réglage de volume automatique selon la revendication 1, **caractérisé en ce que** le capteur inductif comprend une seconde tige (20) assistée d'un ressort (21) à forte charge et d'une bobine, de telle manière qu'après la fin du remplissage du produit visqueux de la chambre de remplissage (5), la tige de piston presse et déplace la seconde tige (20), surmontant la force du ressort, et est introduite dans la bobine, qui génère un signal indiquant que le remplissage est terminé, et quand l'application commence, la seconde tige (20) vient hors de la bobine au moyen de la force du ressort, ce qui indique le début de l'application.

4. Dispositif de distribution pour un produit visqueux avec réglage de volume automatique selon la revendication 3, **caractérisé en ce que** la broche (17) des moyens de réglage de volume de la chambre de remplissage a une configuration tubulaire, dont les faces d'extrémité font face à l'extrémité arrière de la tige de piston (3), et à travers laquelle l'intérieur de la seconde tige (20) du capteur inductif, qui a une longueur plus grande que la broche (17), passe, faisant saillie à travers l'extrémité avant de ladite broche (17) ; dans lequel la broche (17) est jointe à un chariot de guidage (24) pour le guidage du déplacement longitudinal de ladite broche et un chariot de blocage du déplacement angulaire de ladite broche ; et dans lequel le moteur (18) est engrené sur un écrou (23) dans lequel l'intérieur de la broche (17) est agencé, de telle manière que quand le moteur est mis en rotation, le déplacement angulaire de l'écrou (23) a lieu, causant le déplacement longitudinal de la broche (17) et la positionnant dans la position sélectionnée au moyen de la commande électronique (10) et mesurée par l'instrument de mesure analogique (19).

5. Dispositif de distribution pour un produit visqueux avec réglage de volume automatique selon la revendication 4, **caractérisé en ce que** l'instrument de mesure analogique (19) est un instrument de mesure conventionnel du type à induction magnétique qui mesure le champ magnétique généré par un aimant (25) agencé dans le chariot de guidage (24) de la broche (17) au moyen d'une bobine (19a), afin d'obtenir le déplacement linéaire de ladite broche (17).

6. Dispositif de distribution pour un produit visqueux avec réglage de volume automatique selon la revendication 4, **caractérisé en ce que** l'écrou (23) est monté sur des paliers (27) axiaux et radiaux pour faciliter sa rotation.

7. Dispositif de distribution pour un produit visqueux avec réglage de volume automatique selon la revendication 1, **caractérisé en ce que** la commande électronique (10) est configurée pour générer un signal sélectionné entre un signal indiquant l'application correcte quand le signal indiquant la fin de l'application est détecté, et un signal d'erreur indiquant une application incorrecte.

8. Dispositif de distribution pour un produit visqueux avec réglage de volume automatique selon les revendications 2 et 7, **caractérisé en ce que** la commande électronique (10) est configurée pour générer le signal indiquant que l'application a été réalisée correctement quand l'actionnement du micro-interrupteur (16) est maintenue pendant une période de temps établie au préalable, signal qui indique aussi que le dispositif est prêt à réaliser une nouvelle application ; la commande électronique (10) étant aussi configurée pour générer un signal indiquant le début du remplissage de la chambre de remplissage (5) quand le micro-interrupteur est désactivé après la génération du signal indiquant l'application correcte et qu'une période de temps établie au préalable s'est écoulée durant laquelle le micro-interrupteur est resté désactivé ; et la commande électronique (10) étant aussi configurée pour générer un signal indiquant le remplissage de la chambre de remplissage (5) quand l'actionnement du capteur inductif est maintenu pendant une période de temps établie au préalable.

9. Dispositif de distribution pour un produit visqueux avec réglage de volume automatique selon les revendications 2 et 7, **caractérisé en ce que** la commande électronique (10) est configurée pour générer le signal d'erreur indiquant une application incorrecte quand il détecte qu'une période de temps établie au préalable pour le remplissage et l'application du produit est dépassée, quand le capteur magnétique mesurant la position envoie une valeur pour la position de la broche inférieure à un minimum établi au préalable, quand le déplacement de la première tige (14) du capteur mécanique est réalisé dans une période de temps dépassant une période de temps établie au préalable, et quand le temps utilisé pour la recherche de la position d'origine de la broche (17) dépasse une période de temps établie au préalable.

10. Dispositif de distribution pour un produit visqueux avec réglage de volume automatique selon la revendication 1, **caractérisé en ce que** la commande électronique (10) est connectée à un élément extérieur sélectionné entre une commande logique programmable (PLC) et un interrupteur manuel, pour générer un signal indiquant le début de l'application ou un signal indiquant le changement de quantité du produit visqueux à doser, détecté dans la commande électronique (10).

11. Dispositif de distribution pour un produit visqueux avec réglage de volume automatique selon la revendication 1, **caractérisé en ce qu'**il comprend une vanne de sortie sélectionnée entre une vanne de fermeture ou une vanne de fermeture et d'aspiration, agencée à proximité du point d'application du produit pour éviter l'égouttement du produit après l'application.

12. Dispositif de distribution pour un produit visqueux avec réglage de volume automatique selon la revendication 1, **caractérisé en ce qu'**il comprend un débitmètre à canal double agencé entre la vanne de sortie et un conduit de sortie (12) de la base de distribution (7) pour détecter la quantité réelle de produit distribué, valeurs qui sont stockées dans une base de données.

13. Dispositif de distribution pour un produit visqueux avec réglage de volume automatique selon la revendication 1, **caractérisé en ce qu'**il comprend un filtre et un régulateur de pression à la sortie de la pompe de dosage pour garantir une pression constante.
